# FASCICULE DE BREVET EUROPEEN

(11) **EP 3 993 325 B1**
(45) Date de publication et mention de la délivrance du brevet: **08.04.2026**
(21) Numéro de dépôt: 21204094.3
(22) Date de dépôt: 22.10.2021
(51) Int. Cl.: H04L 12/40, H04W 12/03, H04L 9/00, H04W 12/47, H04L 9/08, H04L 67/565, H04L 41/0226, H04L 69/08, H04L 69/24, H04L 69/18, G06F 9/54, H04L 12/66

(54) **ELÉMENT SÉCURISÉ PROCÉDÉ DE COMMUNICATION ENTRE UN DISPOSITIF ÉLECTRONIQUE ET UN ÉLÉMENT SÉCURISÉ**
GESICHERTES ELEMENT UND VERFAHREN ZUR KOMMUNIKATION ZWISCHEN EINER ELEKTRONISCHEN VORRICHTUNG UND EINEM GESICHERTEN ELEMENT
SECURE ELEMENT AND METHOD FOR COMMUNICATION BETWEEN AN ELECTRONIC DEVICE AND A SECURE ELEMENT

(30) Priorité: 27.10.2020 FR 2010973
(43) Date de publication de la demande: 04.05.2022
(73) Titulaire: STMicroelectronics (Rousset) SAS, 13790 Rousset (FR); STMicroelectronics Belgium, 1831 Diegem (BE)
(72) Inventeur: VAN NIEUWENHUYZE, Olivier, 1970 WEZEMBEEK-OPPEM (BE); CHARLES, Alexandre, 13390 AURIOL (FR)
(74) Mandataire: Cabinet Beaumont

(56) Documents cités:
- FR-A1- 3 090 947
- US-A1- 2010 272 254
- US-A1- 2016 112 874
- US-A1- 2016 173 652
- US-A1- 2016 210 179
- US-A1- 2018 376 333
- US-A1- 2019 005 284
- US-A1- 2019 318 341

## Description

### Domaine technique

La présente description concerne de façon générale les dispositifs électroniques, et de façon plus particulière les dispositifs électroniques adaptés à traiter des données secrètes. Plus particulièrement, la présente description concerne la communication d'un élément sécurisé avec d'autres dispositifs électroniques.

### Technique antérieure

Il existe de plus en plus de dispositifs électroniques adaptés à fournir des services digitaux. Ces services digitaux utilisent des mécanismes cryptographiques où il est nécessaire de protéger les données secrètes qui ont une grande importance. L'intégrité du contenu est également très importante, en effet, à l'inverse d'une clé de chiffrement (ou de signature), un numéro d'identification ne doit pas pouvoir être modifié mais il est accessible librement. A cette fin, les dispositifs électroniques sont appelés à garantir la confidentialité et l'intégrité des données.

Un élément sécurisé est un dispositif électronique, autonome ou non, adapté à traiter des données secrètes de façon sécurisée, c'est-à-dire sans que ces données secrètes ne soient accessibles ou déduites, par exemple par des attaques par canaux cachés (side channel attack) ou de pénétration. Un élément sécurisé peut être configuré pour chiffrer des données par exemple.

Il serait souhaitable de pouvoir améliorer, au moins en partie, certains aspects de la communication entre un élément sécurisé et d'autres dispositifs électroniques.

Le document US 2018/376333 décrit un processus dans lequel, lorsque que le protocole d'une application exécutée par un dispositif n'est pas compatible avec celui d'un système distant, convertit la transaction pour permettre la communication. Ce document concerne la gestion d'une transaction entre une carte et un lecteur et ne concerne que les protocoles applicatifs, c'est-à-dire de haut niveau. Il n'intervient pas sur un changement de lien physique et pas sur le routage.

Le document FR 3 090 947 décrit un dispositif à multiples interfaces de communication et procédé correspondant.

Le document US 2016/210179 décrit un pont de protocole de communication pour dispositifs carte de traitement.

Le document US 2010/272254 décrit un appareil NCF sécurisé et un procédé pour supporter différents modules de sécurité.

Le document US 2016/173652 décrit un dispositif pour supporter des communications entre plusieurs types de porteuses sécurisées et son procédé de communication.

Le document US 2019/318341 décrit un gestionnaire mobile intégré de service de confiance.

Le document US 2016/112874 décrit un procédé et un système d'exploitation d'un élément sécurisé.

Le document US 2019/005284 décrit une interface entre un contrôleur de communication en champ proche (NFC) et un élément sécurisé.

### Résumé de l'invention

Il existe un besoin pour des éléments sécurisés adaptés à communiquer efficacement avec d'autres dispositifs électroniques.

Un mode de réalisation pallie tout ou partie des inconvénients des éléments sécurisés connus.

L'invention est définie par les revendications annexées.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon schématique et sous forme de blocs, un exemple de dispositif électronique du type auquel s'appliquent les modes de réalisation décrits ;
la figure 2 représente, de façon schématique et sous forme de blocs, un autre exemple de dispositif électronique du type auquel s'appliquent les modes de réalisation décrits ;
la figure 3 représente, de façon schématique et sous forme de blocs, encore un autre exemple de dispositif électronique du type auquel s'appliquent les modes de réalisation décrits ;
la figure 4 représente, de façon schématique et sous forme de blocs, un mode de réalisation d'une architecture logicielle d'un élément sécurisé d'un dispositif électronique du type de ceux décrits en relation avec les figures 1 à 3 ; et
la figure 5 représente, de façon schématique et sous forme de blocs, un mode de réalisation de communication entre deux dispositifs électroniques.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Divers exemples de mise en œuvre et de réalisation sont exposés par la suite. Indépendamment de la dénomination donnée à ces exemples (modes de réalisation, exemples, variantes, etc.) et des qualificatifs employés (par exemple, de préférence, etc.), seules les parties de description qui sont incluses dans la portée des revendications font partie de la présente invention, les autres exemples n'étant exposés qu'à titre illustratif et n'étant utiles que pour mettre en évidence des aspects spécifiques à l'invention par rapport à ce qui n'en fait pas partie.

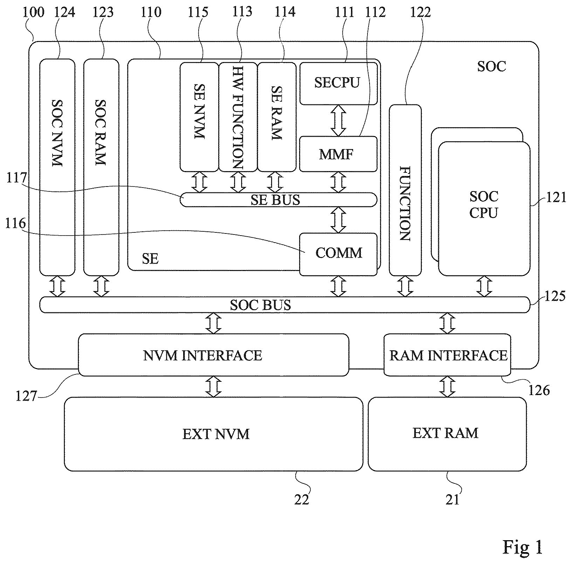

La figure 1 représente, de façon schématique et sous forme de blocs, un exemple de dispositif électronique 100 (SOC) du type auquel s'appliquent les modes de réalisation décrits.

Le dispositif 100 est un dispositif électronique formé sur une seule et même puce (System On Chip - SOC). Le dispositif 100 comprend un élément sécurisé 110 qui, dans cet exemple, est intégré (iSE - integrated Secure Element). L'élément sécurisé 110 est un élément sécurisé intégré dans le dispositif 100, c'est-à-dire qui peut avoir un fonctionnement autonome dans le dispositif 100. Selon une variante de réalisation, l'élément sécurisé 110 utilise certaines ressources matérielles du dispositif 100 pour fonctionner, comme des mémoires, des circuits mettant en oeuvre des fonctionnalités spécifiques, etc.

L'élément sécurisé intégré 110 est un circuit électronique manipulant des données secrètes qui sont, par exemple, chiffrées. L'élément sécurisé 110 comprend :
- au moins un processeur 111 (SE CPU) adapté à traiter des données secrètes ;
- une fonction de gestion de mémoire 112 (MMF) et/ou une unité de gestion de mémoire (MMU) (non représentée), adaptées à gérer la lecture et l'écriture de données dans les mémoires ;
- un ou plusieurs circuits 113 (HW FUNCTION) adaptés à mettre en oeuvre des fonctionnalités matérielles (par exemple un accélérateur cryptographique, une cellule de communication, etc.) de l'élément sécurisé 110 ;
- au moins une mémoire volatile 114 (SE RAM) ;
- au moins une mémoire non volatile 115 (SE NVM) ;
- un circuit de communication 116 (COMM) adapté à gérer les transmissions de données et de commandes entre l'élément sécurisé 110 et le reste du dispositif 100 ; et
- un bus de communication 117 (SE BUS) reliant tous les éléments de l'élément sécurisé 110.

En variante, l'élément sécurisé intégré 110 est connecté à un ou plusieurs bus additionnels de communication. Par exemple, l'élément sécurisé intégré peut avoir un bus selon la norme ISO7816, connecté avec un modem du système sur puce 100, un autre bus de type SWP (Single Wire Protocol - Protocole Unifilaire) connecté à un dispositif de communication en champ proche (NFC - Near Field Communication) .

Le processeur 111 est utilisé pour traiter des commandes et données provenant des mémoires 114 et 115, ou d'autres mémoires comprises dans le dispositif 100. Le processeur 111 utilise le circuit de gestion de mémoire 112 comme intermédiaire pour gérer le stockage en mémoire des données et des commandes, ainsi le processeur n'a jamais directement accès aux mémoires 114 et 115. A titre d'exemple, le circuit 112 peut, par exemple, servir à allouer des espaces mémoire d'une mémoire volatile ou d'une mémoire non volatile à certaines applications mises en oeuvre par l'élément sécurisé intégré.

Les circuits 113 peuvent comprendre une multitude de types de circuits et de composants, des fonctions permettant la copie des données vers des mémoires externes, des coprocesseurs cryptographiques, etc.

Le circuit de communication 116 peut servir de chaîne de réception et d'émission de données à l'élément sécurisé 110. Le circuit 116 peut comprendre des circuits de réception de données, des circuits de chiffrement et/ou de déchiffrement de données, un ou plusieurs routeurs, des circuits de conversion de données. Le dispositif 100 peut ne comprendre que l'élément sécurisé 110, mais peut aussi comprendre, en outre, de façon optionnelle :
- un ou plusieurs processeurs 121 (SOC CPU) adaptés à traiter des données ;
- un ou plusieurs circuits 122 (FUNCTION) adaptés à mettre en oeuvre différentes fonctionnalités du dispositif 100 ;
- une ou plusieurs mémoires volatiles 123 (SOC RAM) ;
- une ou plusieurs mémoires non volatiles 124 (SOC NVM) ; et
- un bus de communication 125 (SOC BUS) permettant d'échanger et de transmettre des commandes et des données à tous les éléments précédemment cités.

Pour des raisons d'encombrement et de compacité, le dispositif 100 peut, en outre, être adapté à stocker des données dans une ou plusieurs mémoires externes. Plus particulièrement, le dispositif 100 peut être adapté à stocker des données dans une mémoire volatile externe 21 (EXT RAM) et/ou dans une mémoire non volatile externe 22 (EXT NVM). Dans ce cas, le dispositif 100 comprend, en outre, des circuits d'interface adaptés à communiquer avec les mémoires externes. Plus particulièrement, le dispositif 100 peut comprendre, dans ce cas-là, un circuit d'interface 126 (RAM INTERFACE) adapté à communiquer avec la mémoire volatile externe 21, et/ou un circuit d'interface 127 (NVM INTERFACE) adapté à communiquer avec la mémoire non volatile 22.

L'élément sécurisé 110 peut avoir accès aux ressources matérielles du dispositif 100 pour fonctionner, comme par exemple aux circuits 122, aux mémoires 123, 124 ou même aux mémoires 21 et 22.

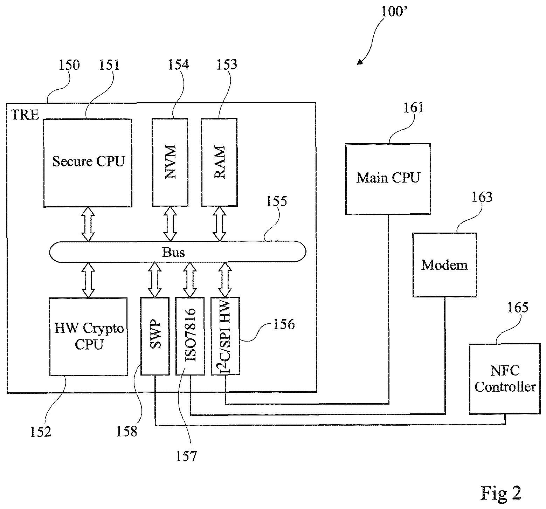

La figure 2 représente, de façon schématique et sous forme de blocs, un autre exemple de dispositif électronique 100' du type auquel s'appliquent les modes de réalisation décrits.

Le dispositif 100' comporte divers circuits ou puces électroniques parmi lesquels :
- un élément sécurisé embarqué (embedded Secure Element - eSE) 150 constituant un environnement sécurisé (TRE - Tamper Resistant Element) ;
- un processeur principal 161 (Main CPU) ;
- un circuit de communication 163 (Modem) de type modem ; et
- un circuit de communication en champ proche 165 (NFC controller) .

L'élément sécurisé embarqué 150 est constitué d'une seule puce et intègre, par exemple :
- un processeur sécurisé 151 (Secure CPU) ;
- un processeur cryptographique matériel 152 (HW Crypto CPU) ou accélérateur cryptographique ;
- une ou plusieurs mémoires volatiles 153 (RAM) ;
- une ou plusieurs mémoires non volatiles 154 (NVM) ; et
- un ou plusieurs bus 155 (Bus) de communication entre les différents constituants de l'élément 150.

L'élément 150 intègre en outre des interfaces de communication avec l'extérieur selon divers protocoles de communication, par exemple :
- une interface 156 (I2C/SPI HW) de type I2C ou SPI de communication avec le processeur externe 161 ;
- une interface 157 (ISO7816) de communication selon la norme ISO7816 avec le modem 163 ; et
- une interface 158 (SWP) de type SWP de communication avec le contrôleur NFC 165.

Le dispositif 100' peut comprendre d'autres circuits, intégrés ou non. Par exemple, l'élément sécurisé embarqué 150 peut utiliser une ou plusieurs mémoires externes (non représentées) avec lesquelles il communique directement ou via le processeur principal.

A la différence d'un élément sécurisé intégré tel que l'élément 110 de la figure 1, un élément sécurisé embarqué 150 n'est pas intégré avec les autres constituants du dispositif 100' et notamment le processeur principal de l'application.

L'élément sécurisé embarqué 150 peut cependant être intégré avec un contrôleur de communication en champ proche (NFC) .

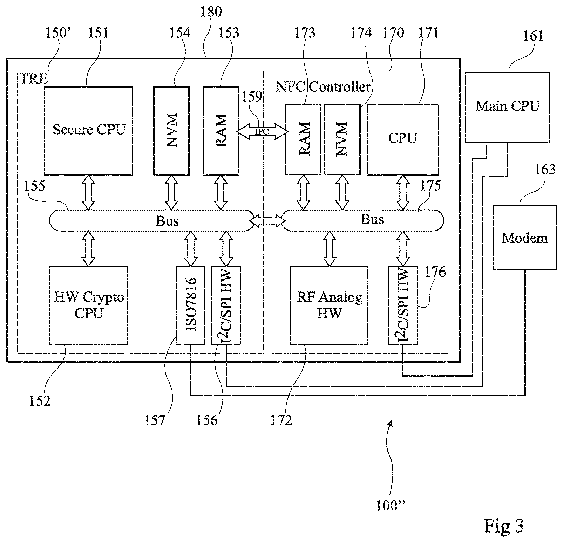

La figure 3 représente, de façon schématique et sous forme de blocs, encore un autre exemple de dispositif électronique 100" du type auquel s'appliquent les modes de réalisation décrits.

Dans cet exemple, on suppose que l'élément sécurisé embarqué est intégré avec un contrôleur de communication en champ proche sur une même puce 180. Ainsi, le circuit intégré ou puce 180 comporte :
- un élément sécurisé embarqué 150' (TRE) incluant les mêmes éléments que l'élément 150 de la figure 2 à l'exception de l'interface 158, à savoir :
   - un processeur sécurisé 151 (Secure CPU) ;
   - un processeur cryptographique matériel 152 (HW Crypto CPU) ;
   - une ou plusieurs mémoires volatiles 153 (RAM) ;
   - une ou plusieurs mémoires non volatiles 154 (NVM) ;
   - un ou plusieurs bus 155 (Bus) de communication entre les différents constituants de l'élément 150 ;
   - une interface 156 (I2C/SPI HW) de type I2C ou SPI de communication avec le processeur externe 161 (Main CPU) ; et
   - une interface 157 (ISO7816) de communication selon la norme ISO7816 avec le modem 163 (Modem) ; et
- un contrôleur NFC 170 (NFC Controller) incluant, par exemple :
   - un processeur 171 (CPU) ;
   - un circuit d'émission/réception radiofréquence 172 (RF Analog HW) ou tête analogique RF ;
   - une ou plusieurs mémoires volatiles 173 (RAM) ;
   - une ou plusieurs mémoires non volatiles 174 (NVM) ;
   - un ou plusieurs bus de communication 175 (Bus) entre les différents constituants du contrôleur NFC ; et
   - une interface 176 (I2C/SPI HW) de communication avec le processeur principal 161 du dispositif 100".

Les échanges entre l'élément sécurisé 150' et le contrôleur 170 transitent directement par les bus 155 et 175 qui, selon les cas, sont reliés entre eux ou constituent un seul et même bus, l'élément 150' et le contrôleur 170 pouvant le cas échéant simuler un protocole SWP.

L'élément sécurisé 150' et le contrôleur peuvent également communiquer par l'intermédiaire de leurs mémoires RAM 153 et 173 via une mémoire partagée 159 permettant la communication entre processus (IPC - Inter Process Communication).

En variante, l'élément sécurisé 150' et le contrôleur peuvent communiquer via leurs cellules de communication (par exemple) SWP internes (non représentées). Cela permet de garder le format des échanges SWP (et des protocoles implémentés sur celui-ci) sans avoir les contraintes (telles que le bruit, la limitation de vitesse du bus, etc.).

L'application à des communications en champ proche entre un élément sécurisé (intégré ou embarqué) constitue une application préférée en raison du fort développement de ces fonctionnalités dans les dispositifs électroniques.

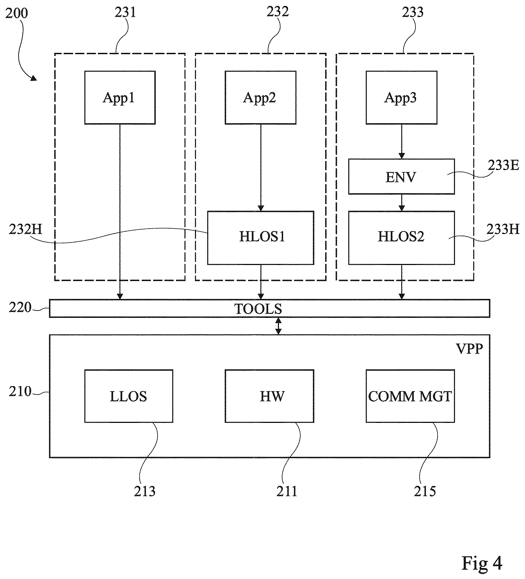

La figure 4 représente, de façon schématique et sous forme de blocs, un mode de réalisation d'une architecture logicielle 200 d'un élément sécurisé d'un dispositif électronique du type de ceux décrits en relation avec les figures 1 à 3.

Sauf précision contraire, l'expression "élément sécurisé" désigne par la suite indifféremment un élément sécurisé embarqué ou un élément sécurisé intégré. Ainsi, l'architecture logicielle 200 de l'élément sécurisé SE peut être mise en oeuvre dans l'un quelconque des éléments 110, 150 ou 150' des figures précédentes.

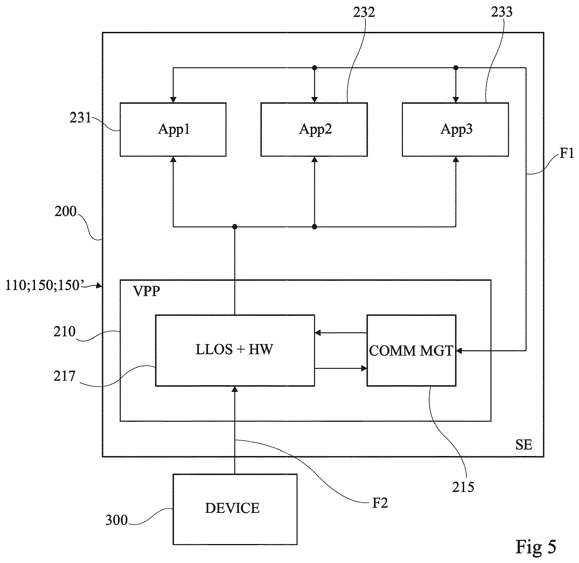

L'architecture 200 comprend une plateforme primaire 210 (VPP), généralement désignée par plateforme primaire virtuelle (Virtual Primary Platform, VPP), comprenant l'accès aux composants électroniques 211 (HW) de l'élément sécurisé SE, et comprenant un ou plusieurs systèmes d'exploitation de bas niveau 213 (LLOS, Low Level Operating System). Selon un mode de réalisation, la plateforme primaire 210 comprend, en outre, un circuit adapté à mettre en oeuvre un logiciel ou processus de gestion de communication 215 (COMM MGT) dont le fonctionnement est décrit en relation avec la figure 5.

Les composants 211 sont les ressources matérielles de l'élément sécurisé SE (110, figure 1 ; 150, figure 2 ; 150', figure 3). Les composants 211 de l'élément sécurisé 110 sont, par exemple, les un ou plusieurs processeurs, par exemple le processeur 111 (figure 1) ou 151 (figures 2 et 3), une ou plusieurs mémoires, par exemple les mémoires 114 et 115 (figure 1) ou 153 et 154 (figures 2 et 3), un ou plusieurs dispositifs de communication, comme un dispositif de communication permettant de communiquer directement avec un dispositif de communication en champ proche (NFC, Near Field Communication), un dispositif de communication à courte distance utilisant, par exemple, la norme Bluetooth, des capteurs biométriques, etc.

Les systèmes d'exploitation de bas niveau 213 sont des logiciels adaptés à mettre en oeuvre les composants 211 pour exécuter des commandes reçues de la part des applications mises en oeuvre par l'élément sécurisé. A titre d'exemple, les systèmes d'exploitation de bas niveau 213 comprennent tout ou partie des logiciels pilotes des composants 211.

Un système d'exploitation de bas niveau 213 est composé d'un code d'exécution (ou code exécutable) et de données d'exécution. Le code d'exécution contient des instructions permettant l'exécution des fonctions du programme. Par définition, les instructions sont invariables pour un programme donné, à l'exception d'une mise à jour du programme qui modifie alors les instructions. Les données d'exécution sont utilisées par le code d'exécution pour contextualiser l'exécution et réaliser la fonction souhaitée. Les données d'exécution peuvent être réparties en deux catégories : les données d'exécution dites "temporaires" et les données d'exécution dites "permanentes" ou "fixes". Par exemple, si la fonction consiste en la vérification d'un code PIN, cette fonction est décomposée en trois parties, le code d'exécution contient des instructions de vérification du code PIN tandis que les données d'exécution permanentes contiennent le code PIN de référence et le nombre d'essais restants, et que les données d'exécution temporaires contiennent le code PIN soumis à vérification.

La plateforme primaire 210 communique avec des applications mises en oeuvre par l'élément sécurisé 110 par des interfaces ou outils 220 (TOOLS) exécutés par la plateforme primaire. Ces interfaces ou outils 220 peuvent comprendre, entres autres :
- des interfaces binaire-programme (ABI, Application Binary Interface) ;
- des registres (VRE, Virtual Register) ; et
- des mémoires tampon de mémorisation, ou mémoires tampon, ou encore des mémoires partagées permettant l'échange de données entre processus via des communications inter-processus (IPC - Inter Process Communication).

Une interface binaire-programme est une interface de bas niveau entre les applications de l'élément sécurisé et son système d'exploitation, ou entre différentes parties d'une application.

Les registres sont des espaces mémoire liés à une fonction matérielle de l'élément sécurisé et utilisés pour stocker temporairement des données, par exemple lorsqu'une commande est envoyée à la plateforme primaire 210 de l'élément sécurisé ou lors d'échanges entre processus exécutés par la plateforme primaire.

Les mémoires tampon (ou mémoires partagées) sont utilisées pour stocker des messages avant leur utilisation par la plateforme 210 ou par des applications 231, 232, 233 de l'élément sécurisé. En pratique, les mémoires tampon sont des espaces mémoire alloués dans une mémoire de l'élément 110, par exemple une mémoire volatile à laquelle l'élément 110 a accès, comme la mémoire 114.

A titre d'exemple, l'architecture logicielle 200 comprend au moins trois applications 231, 232, 233 adaptées à utiliser les interfaces ou outils 220 pour mettre en oeuvre la plateforme primaire 210. Les applications 231, 232, 233 sont des logiciels utilisant les ressources de la plateforme primaire. Bien entendu, l'élément sécurisé met en oeuvre un nombre d'applications dans la limite de ses capacités de calcul.

Un élément sécurisé intégré 110 (figure 1) pourrait n'exécuter qu'une seule application à la fois dans ses mémoires internes et enregistrer les autres applications dans des mémoires externes, ce qui permettrait d'avoir un nombre d'applications limité uniquement par les mémoires externes. Il faut alors préalablement charger l'application dans les mémoires internes avant de l'exécuter (ou de reprendre l'exécution) et décharger l'application précédente avant de pouvoir l'utiliser. A l'inverse, un élément sécurisé embarqué 150 (figure 2) ou 150' (figure 3) privilégiera l'utilisation de ses mémoires internes pour stocker et exécuter les applications, ce qui implique une notion plus limitée d'applications mais une exécution plus rapide car on parlera d'une exécution "en place" (in place) qui ne requiert pas de déplacer l'application. Il reste toutefois possible de combiner un élément sécurisé embarqué avec des mémoires externes et donc de combiner le bénéfice des mémoires internes et externes. Les applications 231, 232, 233 peuvent être adaptées à mettre en oeuvre toutes sortes de fonctionnalités. Elles mettent généralement en œuvre des services digitaux d'un fournisseur de service, par exemple, un service de paiement de type EMV ou de ticket de transport. Ces applications peuvent être mises en combinaison avec une autre application se trouvant dans le processeur principal 121 (figure 1) ou 161 (figures 2 et 3) ou dans un autre environnement sécurisé (Trusted Execution Environment). Le processeur et l'environnement sécurisé sont plus à même d'interagir avec l'utilisateur via une interface utilisateur sécurisée (Trusted User Interface). Les applications 231, 232, 233 sont, par exemple, adaptées à traiter des commandes provenant d'interfaces de communication, comme, par exemple, une transaction bancaire utilisant un dispositif de communication en champ proche. Ces applications peuvent être de différents types, par exemple, une application SIM (Subscriber Identity Module), une application de paiement, une application permettant la validation d'un ticket de transport en commun, etc.

Selon un exemple de type d'application, l'application 231 (App1) est adaptée à être mise en oeuvre directement par la plateforme primaire 210 (VPP) avec l'aide des interfaces ou outils 220. L'application 231 est, par exemple, une application permettant d'effectuer des paiements en communiquant avec un dispositif de communication en champ proche (NFC, Near Field Communication).

Selon un autre exemple de type d'application, l'application 232 est un ensemble d'instructions 232A (App2) adaptées à être exécutées en utilisant un système d'exploitation de haut niveau 232H (HLOS1). Un système d'exploitation de haut-niveau est un logiciel adapté à mettre en oeuvre différentes applications en leur proposant un ensemble de fonctions logicielles communes. Le système d'exploitation 232H est la seule partie de l'application 232 à communiquer avec la plateforme primaire 210 avec l'aide des interfaces ou outils 220. A titre de variante, on peut également considérer que le système d'exploitation de haut niveau, ainsi que toutes les applications qui lui sont attachées, sont une seule application adaptée à être mise en oeuvre par la plateforme primaire 210 avec l'aide des interfaces ou outils 220.

Selon un autre exemple de type d'application, une autre application 233 est un ensemble d'instructions 233A (App3) utilisant un environnement d'exécution 233E (ENV) qui utilise lui-même un système d'exploitation de haut niveau 233H (HLOS2). L'environnement d'exécution est par exemple de type Java ou JavaCard. Le système d'exploitation 233H et l'environnement d'exécution 233E sont les seules parties de l'application 233 à communiquer avec la plateforme primaire 210 avec l'aide des interfaces ou outils 220. A titre de variante, on peut également considérer que le système d'exploitation de haut niveau, ainsi que toutes les applications qui lui sont attachées, sont une application adaptée à être mise en oeuvre par la plateforme primaire 210.

Les systèmes d'exploitation de haut niveau 232H et 233H, ou les applications 232 et 233 elles-mêmes s'il n'y a pas de système d'exploitation de haut niveau, utilisent des images virtuelles des mémoires disponibles pour la gestion des codes d'exécution et des données d'exécution. Grâce à cette technique, les systèmes d'exploitation de haut niveau (ou les applications) n'ont pas accès directement à la gestion des mémoires physiques qu'elles soient volatiles ou non volatiles. En d'autres termes, dans les modes de réalisation décrits, les systèmes d'exploitation de haut niveau gèrent une image virtuelle des mémoires. La correspondance de la répartition physique dans les mémoires volatile(s) et non volatile(s) est assurée par le ou les systèmes d'exploitation de bas niveau 213 en combinaison avec certains modules HW 211. De manière plus générale, on considère que le module 210 effectue la correspondance entre les mémoires virtuelles et physiques.

Par ailleurs, on considère qu'une application peut être dans au moins trois états différents :
- un état actif ou en cours d'exécution (running) par la plateforme primaire 110 ;
- un état de veille, c'est-à-dire que son exécution est interrompue mais qu'elle peut reprendre à tout moment ; et
- un état inactif ou désactivée, c'est-à-dire que son exécution ne peut être redémarrée sans une ou plusieurs opérations préalables.

Lorsqu'une application sort de veille pour être exécutée à nouveau, elle reprend son exécution là où elle s'est arrêtée. Elle n'a pas besoin d'utiliser de routine particulière pour continuer son traitement (processing). Du point de vue de l'application, tout apparaît comme si l'application n'a pas été interrompue.

Lorsqu'une application est désactivée, toutes ses données sont stockées en mémoire de la même façon que pour une application en veille.

La mise en oeuvre de l'application 231, 232, ou 233 est la suivante. Lorsqu'une application souhaite utiliser une ressource matérielle de l'élément sécurisé, c'est-à-dire un ou plusieurs composants 211 de la plateforme primaire 210, cela signifie que les opérations courantes exécutées sur les données fixes sont considérées comme terminées. L'application peut alors exécuter différentes commandes, par exemple, forcer une écriture vers une mémoire non volatile. Pour cela, l'application envoie une commande et/ou des données à la plateforme primaire 210 par l'intermédiaire des interfaces ou outils 220. La commande est prise en charge par une ou plusieurs interfaces binaire-programme avant d'être envoyée aux systèmes d'exploitation de bas niveau 213, c'est-à-dire que la commande est divisée en plusieurs opérations chacune représentée par une interface binaire-programme ou des registres virtuels ou encore une mémoire tampon / mémoire partagée. Les données sont, quant à elles, stockées dans des registres ou transmises via des communications entre processus (IPC). Les systèmes d'exploitation de bas niveau 213 répondent aux demandes des interfaces binaire-programme en appliquant les opérations demandées par les interfaces binaire-programme aux données stockées dans les registres. Les systèmes d'exploitation de bas niveau 213 pilotent ensuite les composants 211 pour exécuter ce que demande l'application.

Les applications 231, 232, 233 ne peuvent pas communiquer ensemble à l'intérieur de l'élément sécurisé. Chaque application 23x (x variant de 1 au nombre d'applications susceptibles d'être exécutées) ne connaît pas l'existence des autres applications 23x. En particulier, chaque système d'exploitation d'une application "croit" être le seul à communiquer avec l'extérieur. Ainsi, si les applications devaient communiquer entre elles, elles devraient le faire comme si elles discutaient d'un élément sécurisé exécutant une application 23x vers un autre élément avec une autre application 23x. Cependant, deux sous-applications d'un même ensemble ou application 233 (une application peut contenir plusieurs sous-applications) utilisent des procédés de communication par paquets pour communiquer entre elles en utilisant les outils IPC de communication entre processus. Chaque application 231, 232, 233 peut, quant à elle, communiquer avec des dispositifs électroniques extérieurs. La communication par paquets est une méthode de transmission de données dans laquelle des messages envoyés sont composés d'un ou plusieurs paquets de données. Chaque paquet de données comprend un en-tête (header) comprenant des informations relatives au type de protocole de communication utilisé, à l'émetteur du message, au récepteur du message, à la taille du message, etc. Parmi les différents protocoles de communication par paquets connus, l'élément sécurisé est susceptible d'utiliser (compatible avec) différents protocoles qui peuvent être classés, en fonction de la nature du protocole, en termes de protocole d'informations échangées, de protocole applicatif, de protocole de communication, de lien physique. Par exemple, ces protocoles incluent :
- le protocole VNP (Virtual Network Protocol) défini par la norme "GlobalPlatform Technology Virtual Primary Platform - Network Protocol 1.0.1" (ou toute version ultérieure) qui correspond à un protocole des informations échangées ;
- le protocole SWP (Single Wire Protocol), défini par la norme ETSI TS 102 613 UICC - Contactless Front-end (CLF) Interface - Physical and data link layer characteristics, qui correspond à un lien physique ;
- le protocole de communication défini par la norme ISO7816 qui couvre à la fois l'échange d'informations, le protocole applicatif, les communications et la nature du lien physique (sans fil) ;
- le protocole HCI (Host Controller Interface), défini par la norme ETSI TS 102 612 v12.0 (ou toute version ultérieure) qui correspond à un protocole applicatif ;
- le protocole CLT, défini par la norme ETSI TS 102 613 (UICC - Contactless Front-end (CLF) Interface - Physical and data link layer characteristics 11.0 (ou toute version ultérieure) qui correspond à un protocole de communication ;
- le protocole sHDLC (Simplified High-Level Data Link Control), défini par la norme ETSI TS 102 613 (- UICC - Contactless Front-end (CLF) Interface - Physical and data link layer characteristics) ; et
- les protocoles I2C et SPI qui correspondent à des liens physiques.

Les messages peuvent aussi être transmis par l'intermédiaire d'une mémoire faisant office de bus de communication. Autrement dit, un bus de communication peut être remplacé par une mémoire dans laquelle sont écrites les données à transmettre par le dispositif émetteur, et lues par le dispositif récepteur.

Le protocole VNP est un protocole de communication adapté à fonctionner pour les communications d'un élément sécurisé. C'est un protocole adapté à gérer l'aiguillage des messages au sein de l'architecture 200 et également vers les dispositifs extérieurs. C'est le protocole de communication privilégié dans un élément sécurisé. Selon un mode de réalisation, le routeur compris dans les composants 211 (en combinaison avec les systèmes d'exploitation de bas niveau 213) est un routeur configuré pour traiter des messages utilisant le protocole VNP.

Les protocoles HCI, sHDLC et CLT sont des protocoles qui se trouvent en conflit avec le protocole VNP, ces protocoles n'étant pas compatibles, les normes ne définissent pas l'interaction entre les deux. Le résultat de ce conflit montre que les protocoles HCI, sHDLC et CLT ne sont pas adaptés à gérer l'aiguillage des messages au sein de l'architecture 200. Ainsi, le routeur compris dans les composants 211 ne peut pas prendre en charge un message utilisant les protocoles sHDLC, CLT et HCI car il n'y a pas les informations pour aiguiller correctement les messages au sein de l'architecture 200.

Les protocoles CLT, sHDLC et HCI, et le protocole défini par la norme ISO7816 sont des protocoles qui ne sont pas compatibles avec l'utilisation du protocole VNP. Le routeur compris dans les composants 211 (en combinaison avec 213) n'est pas apte à prendre en charge un message utilisant les protocoles CLT, sHDLC, HCI et ISO7816.

Dans les modes de réalisation décrits ci-après, on cherche à faire en sorte que l'élément sécurisé (intégré ou embarqué) gère les conflits éventuels entre les applications tout en isolant les applications les unes des autres. En d'autres termes, chaque système d'exploitation d'une application (ou chaque application sans système d'exploitation) croit être seul à accéder à l'élément sécurisé.

Un mode de réalisation d'un procédé de communication entre l'élément sécurisé 110 et l'extérieur explicitant le fonctionnement du processus ou logiciel 215 est décrit en relation avec la figure 5.

La figure 5 représente, de façon schématique et sous forme de blocs, un mode de réalisation de communication entre deux dispositifs électroniques.

Plus particulièrement, la figure 5 illustre, schématiquement et sous forme de blocs, un procédé de communication entre un élément sécurisé SE 110 (figure 1), 150 (figure 2) ou 150' (figure 3) et un dispositif électronique 300 (DEVICE).

L'élément sécurisé SE est représenté par une forme simplifiée de son architecture logicielle 200. La forme simplifiée de l'architecture logicielle 200 comprend :
- la plateforme primaire 210 (VPP) composée d'un bloc 217 (LLOS + HW) représentant l'accès aux composants 211 et les systèmes d'exploitation de bas niveau 213, et du bloc 215 (COMM MGT) représentant le processus ou logiciel de gestion de communication 215 ; et
- trois applications 231 (App1), 232 (App2) et 233 (App3).

Le dispositif électronique 300 utilise n'importe quel protocole de communication par paquets (par exemple, l'un de ceux décrits en relation avec la figure 4) pour communiquer avec l'élément sécurisé. Le dispositif 300 peut être un dispositif électronique extérieur au dispositif 100 (figure 1), 100' (figure 2), 100" (figure 3) dans lequel est compris l'élément sécurisé, ou peut être un élément interne du dispositif 100 (figure 1), 100' (figure 2), 100" (figure 3), distinct de l'élément sécurisé 110. Selon un mode de réalisation particulier, le dispositif 300 est un dispositif de communication en champ proche 170 (figure 3) compris dans le dispositif 100" et adapté à recevoir des communications de dispositifs électroniques extérieurs au dispositif 100".

A une première étape d'initialisation, symbolisée par une flèche F1 en figure 3, les applications 231, 232 et 233 s'enregistrent auprès du logiciel 215. Pendant l'enregistrement d'une application auprès du logiciel 215, l'application envoie au logiciel 215 la liste des protocoles de communication qu'elle est capable d'utiliser (avec lesquels elle est compatible), les paramètres nécessaires pour utiliser les protocoles et fournit aussi au logiciel 215 les informations de routage la concernant. En d'autres termes, on enregistre des informations de routage et une liste de protocoles de communication compatibles et les paramètres associés aux protocoles avec la première application.

Le logiciel 215 est adapté à rendre compatible un message utilisant un premier protocole de communication avec le protocole de communication utilisé par l'élément sécurisé SE. Selon un mode de réalisation, l'élément sécurisé utilise en priorité le protocole de communication VNP défini en relation avec la figure 4. Autrement dit, l'élément sécurisé SE comprend, parmi ses composants 211 (figure 4), au moins un routeur configuré pour utiliser le protocole de communication VNP et adapté à traiter des messages utilisant ce protocole en les aiguillant vers leur destination, comme par exemple, l'application 231, 232 ou 233. Ainsi, le logiciel 215 est adapté à convertir les messages utilisant le protocole SWP, le protocole sHDLC, ou le protocole de communication défini par la norme ISO7816 en des messages utilisant le protocole VNP, en modifiant les en-têtes des paquets constituant le message. De plus, le logiciel 215, connaissant les informations de routage concernant les applications, est, en outre, adapté à traiter des messages utilisant le protocole HCI ou le protocole CLT. Comme indiqué précédemment, les protocoles HCI et CLT sont compatibles avec le protocole VNP mais ne sont pas adaptés à gérer l'aiguillage des messages. En d'autres termes, le logiciel 215 précise l'application visée (ciblée) par des premiers messages dans un protocole donné, dans les en-têtes des paquets de deuxièmes messages dans un autre protocole. Lorsqu'un message utilisant le protocole HCI ou le protocole CLT est reçu par l'élément sécurisé SE, le logiciel 215 est adapté à aiguiller le message vers l'application utilisant ce protocole de communication. Le logiciel 215 (en combinaison avec le bloc 217) apporte un avantage pour le dispositif 300. En effet, le dispositif 300 n'est pas capable d'utiliser le protocole VNP et utilise son propre protocole (SWP, sHDLC, ISO7816, etc.). Un avantage de cette solution est que le logiciel 215 (en combinaison avec 217) peut faire croire qu'il n'existe qu'une seule application (231, 232, 233) du point de vue du dispositif 300. En effet, grâce aux informations fournies lors de l'enregistrement d'une application, le dispositif 300 est capable de combiner les informations pour les agréger et faire croire qu'il n'y a qu'une seule application mais qui combine toute les "fonctionnalités" des applications (231, 232, 233) actives/enregistrées. Lorsqu'un message vient du dispositif 300, grâce aux informations de routage, la couche logicielle 215 (en combinaison avec 217) est capable de router le message vers l'application visée (tout en convertissant le protocole si besoin comme indiqué précédemment).

Un exemple de communication entre le dispositif 300 et l'élément sécurisé est le suivant. Le dispositif 300 envoie un message destiné à une application de l'élément sécurisé, par exemple l'application 231. Ce message est, dans un premier temps reçu par les composants et les systèmes d'exploitation de bas niveau 217 de la plateforme primaire 210. Plus particulièrement, le message est reçu par le routeur compris dans les composants de l'élément sécurisé SE. Si le message utilise un protocole de communication différent du protocole VNP, le message est envoyé au logiciel 215 pour traitement. Selon une variante de réalisation, tous les messages peuvent être envoyés au logiciel 215 pour être traités. Si le message utilise un protocole de communication compatible avec le protocole VNP, c'est-à-dire le protocole HCI ou le protocole CLT, le logiciel utilise les informations de routage des applications 231, 232, et 233 pour aiguiller le message vers l'application 231. Si le message utilise un protocole de communication qui n'est pas compatible avec le protocole VNP, le logiciel 215 convertit le message pour qu'il utilise le protocole VNP. Pour cela il modifie l'en-tête des paquets constituant le message, et utilise les informations de routage des applications 231, 232, et 233 pour aiguiller le message vers l'application 231.

Selon un mode de réalisation, le processus ou logiciel 215 est, en outre, adapté à gérer les conflits entre plusieurs applications. Plus particulièrement, il peut arriver que plusieurs applications utilisent le même protocole de communication ou des paramètres qui pourraient être en conflit sur un même protocole. Lors de leur enregistrement, chaque application fournirait la liste des protocoles, des paramètres et des informations de routage dont elle a besoin. Si ces informations sont incompatibles avec les paramètres déjà existants, l'enregistrement (ou la modification) de ces paramètres par l'application serait refusé. Le logiciel 215 (en combinaison avec 217) pourrait aussi fournir un mécanisme pour gérer les conflits par exemple en mentionnant quelle application provoque le conflit afin qu'il soit résolu (par l'utilisation par exemple qui désactiverait l'application conflictuelle et permettrait l'enregistrement/modification de cette nouvelle application). Le logiciel 215 (en combinaison avec 217) est adapté à fournir les messages reçus à la bonne application notamment grâce aux informations de routage fournies par l'application.

Selon un mode de réalisation, le logiciel 215 est, en outre, adapté à effacer les informations relatives à une application, c'est-à-dire la liste des protocoles de communication qu'elle utilise et ses informations de routage, à la demande de l'application. A titre d'exemple, une application peut demander de se désenregistrer à chaque fois qu'elle passe à un état inactif.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Elément sécurisé (110 ; 150 ; 150') adapté à mettre en oeuvre au moins une première application (231, 232, 233), et comprenant un circuit (210) adapté à :
- enregistrer des informations de routage et une liste et des paramètres de protocoles de communication compatibles avec ladite première application (231, 232, 233) ;
- vérifier la compatibilité d'un premier protocole de communication utilisé par des premiers messages destinés à ladite première application (231, 232, 233) avec les protocoles de ladite liste ;
- convertir lesdits premiers messages en des deuxièmes messages utilisant un deuxième protocole de communication faisant partie de ladite liste si le premier protocole n'est pas compatible avec au moins un des protocoles de ladite liste, ladite conversion incluant la modification des en-têtes des deuxièmes messages pour préciser les informations de routage de ladite première application ciblée par le premier message ; et
- aiguiller, sur la base desdites en-têtes modifiées, lesdits deuxièmes messages vers ladite première application en utilisant les informations de routage de ladite première application (231, 232, 233).

2. Procédé de communication entre un dispositif électronique et un élément sécurisé (110) adapté à mettre en oeuvre au moins une première application (231, 232, 233), le procédé comprenant des étapes, mise en œuvre dans l'élément sécurisé et consistant à :
- enregistrer des informations de routage et une liste de protocoles de communication compatibles avec ladite première application (231, 232, 233) ;
- vérifier la compatibilité d'un premier protocole de communication utilisé par des premiers messages destinés à ladite première application (231, 232, 233) avec les protocoles de ladite liste ;
- convertir lesdits premiers messages en des deuxièmes messages utilisant un deuxième protocole de communication faisant partie de ladite liste si le premier protocole n'est pas compatible avec au moins un des protocoles de ladite liste, ladite conversion incluant la modification des en-têtes des deuxièmes messages pour préciser les informations de routage de ladite première application ciblée par les premiers messages ; et
- aiguiller, sur la base desdites en-têtes modifées, lesdits deuxièmes messages vers ladite première application en utilisant les informations de routage de ladite première application (231, 232, 233).

3. Elément selon la revendication 1 ou procédé selon la revendication 2, dans lequel les premiers protocoles de la liste sont choisis parmi le groupe comprenant le protocole VNP défini par la norme, le protocole HCI, le protocole SWP, le protocole CLT, le protocole de communication par paquets défini par la norme ISO7816, le protocole sHDLC et un protocole de communication utilisant une mémoire de temporisation interne.

4. Elément selon la revendication 1 ou 3, ou procédé selon la revendication 2 ou 3, dans lequel le deuxième protocole est le protocole VNP.

5. Elément selon l'une quelconque des revendications 1, 3, 4, ou procédé selon l'une quelconque des revendications 2 à 4, dans lequel l'élément sécurisé comprend, en outre, des composants électroniques (211) et des systèmes d'exploitation de bas niveau (213).

6. Elément ou procédé selon la revendication 5, dans lequel ladite première application (231, 232, 233) est mise en oeuvre en utilisant lesdits composants électroniques (211) et lesdits systèmes d'exploitation de bas niveau (213).

7. Elément selon l'une quelconque des revendications 1, 3 à 6, ou procédé selon l'une quelconque des revendications 2 à 6, dans lequel l'élément sécurisé est adapté à mettre en oeuvre au moins une deuxième application (231, 232, 233).

8. Elément ou procédé selon la revendication 7, dans lequel les premiers messages sont aiguillés vers ladite première application (231, 232, 233) même si ladite deuxième application (231, 232, 233) utilise les mêmes protocoles de communication que la première application (231, 232, 233).

9. Elément selon l'une quelconque des revendications 1, 3 à 8, ou procédé selon l'une quelconque des revendications 2 à 8, dans lequel la liste des informations de routage et des protocoles de communication de ladite première application (231, 232, 233) est effacée ou modifiée si ladite première application (231, 232, 233) le demande.

## Patentansprüche

1. Sicheres Element (110; 150; 150'), das zum Implementieren wenigstens einer ersten Anwendung (231, 232, 233) ausgelegt ist und eine Schaltung (210) aufweist, die ausgelegt ist zum:
- Aufzeichnen von Routing-Daten und einer Liste und Parametern von Kommunikationsprotokollen, die mit der ersten Anwendung (231, 232, 233) kompatibel sind;
- Verifizieren der Kompatibilität eines ersten Kommunikationsprotokolls, das von ersten Nachrichten verwendet wird, die für die erste Anwendung (231, 232, 233) bestimmt sind, mit den Protokollen der Liste;
- Umwandeln der ersten Nachrichten in zweite Nachrichten unter Verwendung eines zweiten Kommunikationsprotokolls, das in der Liste enthalten ist, wenn das erste Protokoll mit wenigstens einem der Protokolle der Liste nicht kompatibel ist, wobei das Umwandeln das Modifizieren von Headern der zweiten Nachrichten beinhaltet, um Routing-Informationen der ersten Anwendung anzugeben, auf die die erste Nachricht abzielt; und
- Weiterleiten, basierend auf den modifizierten Headern, der zweiten Nachrichten an die erste Anwendung unter Verwendung der Routing-Informationen der ersten Anwendung (231, 232, 233).

2. Verfahren zur Kommunikation zwischen einer elektronischen Einrichtung und einem sicheren Element (110), das zum Implementieren wenigstens einer ersten Anwendung (231, 232, 233) ausgelegt ist, wobei das Verfahren die folgenden Schritte aufweist, die in dem sicheren Element implementiert werden:
- Aufzeichnen von Routing-Informationen und einer Liste von Kommunikationsprotokollen, die mit der ersten Anwendung (231, 232, 233) kompatibel sind;
- Verifizieren der Kompatibilität eines ersten Kommunikationsprotokolls, das von ersten Nachrichten verwendet wird, die für die erste Anwendung (231, 232, 233) bestimmt sind, mit den Protokollen der Liste;
- Umwandeln der ersten Nachrichten in zweite Nachrichten unter Verwendung eines zweiten Kommunikationsprotokolls, das in der Liste enthalten ist, wenn das erste Protokoll mit wenigstens einem der Protokolle der Liste nicht kompatibel ist, wobei das Umwandeln das Modifizieren von Headern der zweiten Nachrichten beinhaltet, um Routing-Informationen der ersten Anwendung anzugeben, auf die die erste Nachricht abzielt; und
- Weiterleiten der zweiten Nachrichten an die erste Anwendung basierend auf den modifizierten Headern unter Verwendung der Routing-Daten der ersten Anwendung (231, 232, 233).

3. Element nach Anspruch 1 oder Verfahren nach Anspruch 2, wobei die ersten Protokolle in der Liste aus der Gruppe ausgewählt sind, die Folgendes aufweist: das VNP-Protokoll, das durch den Standard definiert ist, das HCI-Protokoll, das SWP-Protokoll, das CLT-Protokoll, das Paketkommunikationsprotokoll, das durch den ISO7816-Standard definiert ist, das sHDLC-Protokoll und ein Kommunikationsprotokoll, das einen internen Zeitgeberspeicher verwendet.

4. Element nach Anspruch 1 oder 3 oder Verfahren nach Anspruch 2 oder 3, wobei das zweite Protokoll das VNP-Protokoll ist.

5. Element nach einem der Ansprüche 1, 3, 4 oder Verfahren nach einem der Ansprüche 2 bis 4, wobei das sichere Element ferner elektronische Komponenten (211) und Low-Level-Betriebssysteme (213) aufweist.

6. Element oder Verfahren nach Anspruch 5, wobei die erste Anwendung (231, 232, 233) unter Verwendung der elektronischen Komponenten (211) und der Low-Level-Betriebssysteme (213) implementiert wird.

7. Element nach einem der Ansprüche 1, 3 bis 6 oder Verfahren nach einem der Ansprüche 2 bis 6, wobei das sichere Element dafür ausgelegt ist, wenigstens eine zweite Anwendung (231, 232, 233) zu implementieren.

8. Element oder Verfahren nach Anspruch 7, wobei die ersten Nachrichten an die erste Anwendung (231, 232, 233) gerichtet sind, selbst wenn die zweite Anwendung (231, 232, 233) dieselben Kommunikationsprotokolle wie die erste Anwendung (231, 232, 233) verwendet.

9. Element nach einem der Ansprüche 1, 3 bis 8 oder Verfahren nach einem der Ansprüche 2 bis 8, wobei die Liste der Routingdaten und der Kommunikationsprotokolle der ersten Anwendung (231, 232, 233) gelöscht oder geändert wird, wenn die erste Anwendung (231, 232, 233) dies anfordert.

## Claims

1. Secure element (110; 150; 150') adapted to implementing at least one first application (231, 232, 233), and comprising a circuit (210) adapted to:
- recording routing data and a list and parameters of communication protocols compatible with said first application (231, 232, 233);
- verifying the compatibility of a first communication protocol used by first messages intended for said first application (231, 232, 233) with the protocols of said list;
- converting said first messages into second messages using a second communication protocol, included in said list, if the first protocol is not compatible with at least one of the protocols of said list, said conversion including the modification of headers of the second messages to specify routing information of said first application targeted by the first message; and
- directing, based on said modified headers, said second messages to said first application by using the routing information of said first application (231, 232, 233).

2. Method of communication between an electronic device and a secure element (110) adapted to implementing at least a first application (231, 232, 233), the method comprising steps, implemented in the secure element, of:
- recording routing information and a list of communication protocols compatible with said first application (231, 232, 233);
- verifying the compatibility of a first communication protocol used by first messages intended for said first application (231, 232, 233) with the protocols of said list;
- converting said first messages into second messages using a second communication protocol, included in the list, if the first protocol is not compatible with at least one of the protocols of said list said conversion including the modification of headers of the second messages to specify routing information of said first application targeted by the first message; and
- directing, based on said modified headers, said second messages to said first application by using the routing data of said first application (231, 232, 233).

3. Element according to claim 1 or method according to claim 2, wherein the first protocols in the list are selected from the group comprising the VNP protocol defined by the standard, the HCI protocol, the SWP protocol, the CLT protocol, the packet communication protocol defined by the ISO7816 standard, the sHDLC protocol, and a communication protocol using an internal timing memory.

4. Element according to claim 1 or 3, or method according to claim 2 or 3, wherein the second protocol is the VNP protocol.

5. Element according to any of claims 1, 3, 4, or method according to any of claims 2 to 4, wherein the secure element further comprises electronic components (211) and low-level operating systems (213).

6. Element or method according to claim 5, wherein said first application (231, 232, 233) is implemented by using said electronic components (211) and said low-level operating systems (213).

7. Element according to any of claims 1, 3 to 6, or method according to any of claims 2 to 6, wherein the secure element is adapted to implementing at least one second application (231, 232, 233).

8. Element or method according to claim 7, wherein the first messages are directed to said first application (231, 232, 233) even if said second application (231, 232, 233) uses the same communication protocols as the first application (231, 232, 233).

9. Element according to any of claims 1, 3 to 8, or method according to any of claims 2 to 8, wherein the list of the routing data and of the communication protocols of said first application (231, 232, 233) is erased or modified if said first application (231, 232, 233) requests it.
